# EUROPÄISCHE PATENTSCHRIFT

(11) **EP 2 963 763 B1**
(45) Veröffentlichungstag und Bekanntmachung des Hinweises auf die Patenterteilung: **04.07.2018**
(21) Anmeldenummer: 15165407.6
(22) Anmeldetag: 28.04.2015
(51) Int. Cl.: H02J 7/02, H02J 50/10, H02J 50/60, B60L 11/18, B60L 11/00, B60L 3/00

(54) **INDUKTIVE LADEEINRICHTUNG UND VORRICHTUNG ZUR ERKENNUNG EINES FREMDOBJEKTES AN EINER OBERFLÄCHE EINER INDUKTIVEN EINRICHTUNG ZUR ENERGIEÜBERTRAGUNG**
INDUCTIVE CHARGING DEVICE, AND DEVICE FOR DETECTING AN ALIEN OBJECT ON A SURFACE OF AN INDUCTIVE ENERGY TRANSMISSION DEVICE
DISPOSITIF DE CHARGEMENT INDUCTIF ET DISPOSITIF DE DÉTECTION D'UN OBJET ÉTRANGER SUR UNE SURFACE D'UN DISPOSITIF INDUCTIF DESTINÉ À LA TRANSMISSION D'ÉNERGIE

(30) Priorität: 02.07.2014 DE 102014212857
(43) Veröffentlichungstag der Anmeldung: 06.01.2016
(73) Patentinhaber: ROBERT BOSCH GMBH, 70442 Stuttgart (DE)
(72) Erfinder: Lang, Thomas, 72768 Reutlingen (DE); Heinzelmann, Ralf, 72393 Burladingen (DE)

(56) Entgegenhaltungen:
- WO-A1-2013/001810
- US-A1- 2009 015 197
- US-A1- 2014 159 501

## Beschreibung

### Stand der Technik

Die vorliegende Erfindung betrifft eine induktive Ladeeinrichtung sowie eine Vorrichtung zur Erkennung eines Fremdobjektes an einer Oberfläche einer induktiven Einrichtung zur Energieübertragung. Insbesondere betrifft die vorliegende Erfindung eine differenzierte Erkennung unterschiedlicher Fehlerfälle und Möglichkeiten zu deren Abwendung.

Um mobile Einheiten (z. B. elektrisch antreibbare Fahrzeuge u. a. Fortbewegungsmittel) mit elektrischer Energie zu versorgen, sind Ladeeinrichtungen bekannt, welche über ein elektrisches Netz bezogene Energie, beispielsweise über metallische elektrische Kontakte, an die Mobileinheit abgeben können. Die Funktion metallischer Kontakte ist jedoch üblicherweise empfindlich gegenüber Verschmutzungen und Korrosion. Daher werden im Stand der Technik induktive Einrichtungen zur Energieübertragung verwendet, welche (z. B. durch ein Gehäuse aus Kunststoff) gekapselt sein können. Die Übertragung der elektrischen Energie erfolgt mittels magnetischer Felder, welche die Kapselung durchdringen. Je größer die übertragene Energie ist, umso erheblicher sind die Auswirkungen, welche im Bereich der elektromagnetischen Felder befindliche Störkörper, im Folgenden "Fremdkörper" genannt, auf den Betrieb der Einrichtung haben können. Eine bekannte Anordnung zur thermischen Erkennung eines Fremdkörpers arbeitet mit Thermosensoren, welche auf eine thermisch leitfähige Schicht aufgebracht sind und zur Fremdkörpererkennung hinsichtlich vordefinierter Schwellenwerte abgefragt werden. Die vorgenannte Anordnung ist jedoch ohne weitere Maßnahmen für eine eindeutige Fremdkörpererkennung nicht ausreichend empfindlich und nicht selektiv genug. Eine festgestellte Temperaturerhöhung auf der besagten thermisch leitenden Schicht kann nämlich auch durch einen Aufheizvorgang stattfinden, welcher nicht auf einen Fremdkörper zurückzuführen ist. Problematisch sind hierbei Betriebsfälle, bei welchen die Umgebungstemperatur sehr hoch ist (z. B. in Fällen, in welchen das Ladesystem direkter Sonneneinstrahlung ausgesetzt ist). Infolgedessen wird ein Fremdkörper nicht erkannt und die Energiezufuhr nicht unterbrochen oder es erfolgt eine unerwünschte Abschaltung aufgrund eines Temperaturanstieges auch ohne das Vorhandensein eines Fremdkörpers. Zudem kann eine hohe Temperatur auch bei einer betriebszustandsbedingten hohen Energieübertragung zwischen der Sende- und der Empfängerspule des Systems auftreten, wenn z. B. ein leerer Akku mit einem hohen Strom geladen wird. Auch in diesem Fall besteht die Gefahr eines unerwünschten Abschaltens der Energieübertragung ohne das Vorhandensein eines Fremdkörpers.

WO 2012/004092 A1 offenbart eine induktive Kopplung innerhalb eines drahtlosen Energieübertragungssystems, bei welchem mittels Temperatursensoren auf einer thermisch leitfähigen Schicht eine fremdkörperbedingte Überhitzung der Schicht erfasst wird. Im Ansprechen auf das Überschreiten vordefinierter Schwellenwerte wird automatisch ein Schalter zur Unterbrechung der Energiezufuhr betätigt.

Es ist eine Aufgabe der vorliegenden Erfindung, die unterschiedlichen Betriebszustände eines induktiven Energieübertragungssystems differenzierter untersuchen zu können.

### Offenbarung der Erfindung

Die vorstehend genannte Aufgabe wird erfindungsgemäß durch eine Vorrichtung zur Erkennung eines Fremdobjektes an einer "Oberfläche (im Folgenden zur Unterscheidung gegenüber anderen Oberflächenabschnitten als "Kontaktfläche" bezeichnet, ohne dass im ordnungsgemäßen Betrieb ein Kontakt erforderlich ist)einer induktiven Einrichtung zur Energieübertragung an eine Sekundäreinheit gelöst. Insbesondere können erfindungsgemäß Fremdobjekte erkannt werden, welche sich bei Exposition durch ein elektromagnetisches Wechselfeld erhitzen. Dies ist für elektrisch leitfähige Objekte der Fall, in welchen Wirbelströme entstehen, die thermische Verluste bedingen können. Die Kontaktfläche sei insbesondere ein solcher Oberflächenbereich der induktiven Einrichtung, an welcher eine Sekundäreinheit derart angeordnet wird, dass zumindest ein überwiegender Teil der an die Sekundäreinheit zu übertragenden Energie durch die diese Kontaktfläche durchdringende elektromagnetische Wechselfelder transportiert wird. Die Sekundäreinheit kann beispielsweise ein elektrisch zumindest anteilig antreibbares Fortbewegungsmittel (z. B. ein Pedelec, ein e-Bike und/oder ein e-Roller) sein. Die Vorrichtung kann als Teil der induktiven Einrichtung (z. B. ein Ladegerät, ein Netzteil o. ä.) ausgestaltet sein. Sie umfasst eine Primärspule, mittels welcher die zu übertragende Energie in elektromagnetische Wechselfelder gewandelt wird. Zusätzlich ist eine Kontaktfläche, welche auf Fremdobjekte zu überprüfen ist, vorgesehen, an welche eine korrespondierende Kontaktfläche der Sekundäreinheit zum Zwecke der Energieübertragung angebracht wird. Erfindungsgemäß ist ein erster Temperatursensor thermisch an die Kontaktfläche der Vorrichtung gekoppelt. Mit anderen Worten kann der Temperatursensor entweder direkt an der Kontaktfläche anliegen und/oder über eine thermisch gut leitende Schicht mit dieser verbunden sein. Erfindungsgemäß ist zusätzlich ein zweiter Temperatursensor vorgesehen, welcher thermisch an die Primärspule gekoppelt ist. Insbesondere kann der zweite Temperatursensor thermisch erheblich schlechter an die Kontaktfläche der Vorrichtung angekoppelt sein als der erste Temperatursensor. Beide Temperatursensoren sind informationstechnisch mit einer Auswerteeinheit (z. B. ein programmierbarer Prozessor, ein Microcontroller, ein Nanocontroller o. ä.) verbunden. Hierbei ist die Auswerteeinheit eingerichtet, die Temperatursignale der Temperatursensoren daraufhin zu überprüfen, ob ein Temperatureinstieg des ersten Temperatursensors (bzw. der Kontaktfläche) schneller ansteigt als eine Temperatur des zweiten Temperatursensors (der Primärspule). Sofern ein vordefinierter Zusammenhang zwischen den Temperaturanstiegen der Kontaktfläche bzw. der Primärspule ermittelt wird, schließt die Auswerteeinheit auf das Vorhandensein eines Fremdobjektes. Da das Fremdobjekt die Kontaktfläche unmittelbarer und stärker erhitzt als den im Bereich der Primärspule angeordneten zweiten Temperatursensor, in einer Situation ohne Fremdobjekt jedoch verlustleistungsbedingt eine schnellere Temperaturzunahme der Primärspule als der Kontaktfläche zu erwarten ist, ist erfindungsgemäß eine sichere Erkennung eines Fremdobjektes an einer Kontaktfläche einer induktiven Einrichtung zur Energieübertragung möglich.

Entsprechend dem vorstehend genannten Aufbau wird gemäß einem zweiten erfindungsgemäßen Aspekt eine entsprechend aufgebaute Vorrichtung zur Erkennung eines Fremdobjektes an einer Kontaktfläche einer Sekundäreinheit (z. B. an einem Pedelec, einem e-Bike und/oder einem e-Roller angeordnet) zum Empfang von Energie von einer induktiven Einrichtung bereitgestellt. Die induktive Einrichtung kann insbesondere entsprechend den vorstehenden Ausführungen ausgestaltet sein. Demgegenüber weist die Vorrichtung eine Sekundärspule auf, welche zum Empfang elektromagnetisch an die Vorrichtung gesendeter Energie vorgesehen ist. Die Sekundärspule kann beispielsweise elektrisch mit einem Energiespeicher gekoppelt sein, der über die induktive Einrichtung geladen werden soll. Die Kontaktfläche dient daher zur Anbringung z.B. einer oben beschriebenen induktiven Einrichtung. Ein erster Temperatursensor ist thermisch an die Kontaktfläche, ein zweiter Temperatursensor ist thermisch an die Sekundärspule gekoppelt. Eine Auswerteeinheit ist vorgesehen, Signale der Temperatursensoren zu erfassen und im Ansprechen auf einen gegenüber einem Anstieg der mittels des ersten Temperatursensors erfassten Temperatur langsameren Anstieg der mittels des zweiten Temperatursensors erfassten Temperatur ein Fremdobjekt auf der Kontaktfläche zu erkennen. Im Wesentlichen unterscheidet sich diese Vorrichtung von der zuvor beschriebenen primärseitigen Vorrichtung durch die Flussrichtung der elektromagnetischen Energie. Die übrigen Merkmale können entsprechend ausgestaltet sein und im Bezug zueinander stehen. Auf diese Weise werden die Merkmale, Merkmalskombinationen und die sich aus diesen ergebenden Vorteile der vorgenannten Vorrichtung entsprechend verwirklicht.

Die Unteransprüche zeigen bevorzugte Weiterbildung der Erfindung.

Die sekundärseitig angeordnete Vorrichtung kann insbesondere eine Sendeeinheit umfassen, mittels welcher ein Signal an eine angekoppelte induktive Einrichtung ausgegeben wird, sobald auf der Kontaktfläche ein Fremdkörper erkannt worden ist. Auf diese Weise kann die induktive Einrichtung die elektromagnetisch gewandelte Energie reduzieren und die Erwärmung des Fremdkörpers somit reduzieren. Die Brandgefahr und die Gefahr von Beschädigungen der Kontaktflächen und weiterer Komponenten der erfindungsgemäßen Vorrichtungen werden somit reduziert.

Bevorzugt ist die jeweilige Kontaktfläche gegenüber dem zweiten Temperatursensor thermisch isoliert. Mit anderen Worten ist eigens eine thermische Isolation zwischen der Kontaktfläche und der jeweiligen Spule zur induktiven Energieübertragung vorgesehen. Auf diese Weise können mittels der beidseitig der Isolierung angeordneten Temperatursensoren stärker voneinander verschiedene thermische Ereignisse erfasst und der Auswerteeinheit gemeldet werden. Ein "Übersprechen" der Wärme von der Spule zum ersten Temperatursensor bzw. von der Kontaktfläche zum zweiten Temperatursensor wird somit reduziert. Die Erkennungssicherheit bestimmter Fehlerfälle erhöht sich entsprechend.

Um zusätzlich zur erfindungsgemäßen Fremdkörpererkennung weitere Fehler innerhalb der induktiven Einrichtung erkennen und auf diese reagieren zu können, ist die Auswerteeinheit weiter eingerichtet, die Signale der Temperatursensoren mit jeweiligen (absoluten) Schwellenwerten (z.B. "zulässigen Höchsttemperaturen") zu vergleichen und im Falle einer Überschreitung ein entsprechendes Fehlersignal auszugeben. Die Schwellenwerte können beispielsweise in einem Speichermittel abgelegt sein, wobei den Schwellenwerten Informationen bezüglich wahrscheinlicher Fehler zugeordnet sind. Entsprechende Fehlersignale können einem Anwender der induktiven Einrichtung akustisch und/ oder haptisch und/oder optisch mitgeteilt werden.

Eine Möglichkeit, eine erfindungsgemäße thermische Leitfähigkeitsschichtung innerhalb der erfindungsgemäßen Vorrichtung zu realisieren besteht darin, die jeweilige Kontaktfläche durch eine Dotierung einer Oberfläche eines Gehäuses der Vorrichtung zu erzielen. Insbesondere bei einer oberflächlichen Dotierung kann eine thermische Flächenleitfähigkeit erzeugt werden. Über diese können von erwärmten Fremdkörpern stammende Temperatursignale an einen am Rande oder abseits der Kontaktfläche angeordneten ersten Temperatursensor geleitet werden, indem die oberflächliche Dotierung des Gehäuses jedoch nicht zu einer thermischen Volumenleitfähigkeit des Gehäuses führt, bleiben im Bereich der Spulen angeordnete Temperatursensoren von einer solchen Temperaturerhöhung erfindungsgemäß weniger stark beeinflusst. Die Dotierung lässt sich fertigungstechnisch einfach und kostengünstig vornehmen und erübrigt eine Einbringung thermischer Isolationsmaßnahmen in Form separater Bauteile, was die Fertigungskosten verringert.

Zur Abfuhr im Betrieb zwangsläufig auftretender Verlustwärme können die Primärspule und/oder die Sekundärspule erfindungsgemäßer Vorrichtungen in ein thermisch volumenleitfähiges Material eingebettet sein. Das thermisch volumenleitfähige Material kann beispielsweise an einer von der Kontaktfläche unabhängigen Oberfläche des jeweiligen Gehäuses angekoppelt sein, um die Verlustwärme effizient abzuführen. Dieses verbessert im Falle eines vorhandenen Fremdkörpers das Temperaturgefälle und somit die Erkennungssicherheit.

Der Vergleich der Temperatursensorsignale kann beispielsweise mittels eines Komparators durchgeführt werden, welcher Bestandteil der Auswerteeinheit sein kann. Der erste Temperatursensor ist an einen ersten Eingang des Komparators und der zweite Temperatursensor an einen zweiten Eingang des Komparators angeschlossen. In Abhängigkeit der Temperaturänderungen gibt der Komparator an seinem Ausgang ein Signal aus, anhand dessen auf das Vorhandensein eines Fremdkörpers oder einen anderen Fehlerfall geschlossen werden kann.

Zusätzlich kann die Auswerteeinheit ein Hystereseglied und einen Leistungsschalter umfassen, wobei ein Ausgang des Hysteresegliedes an den Leistungsschalter angeschlossen ist. Das Hystereseglied stabilisiert die Ausgangssignale des Komparators und führt somit zu wohldefinierten Schaltzuständen des Leistungsschalters. Der Leistungsschalter kann beispielsweise eingerichtet sein, eine primärseitige Energiezufuhr zu unterbrechen, um eine Erhitzung eines Fremdkörpers nicht weiter zu begünstigen. Ein Verstärker kann dazu eingerichtet sein, ein Ausgangssignal des Komparators zu verstärken. Auf diese Weise können die Signal-Rauschabstände bei der Übertragung der Signale verbessert werden und somit die Fehleranfälligkeit gesenkt werden.

Bevor die erfindungsgemäße Auswerteeinheit die Fremdkörpererkennung startet, kann sie das Bestehen einer elektrischen Energieübertragung zwischen der induktiven Einrichtung und der Sekundäreinheit prüfen. Erst wenn die Energieübertragung bestimmungsgemäß durchgeführt wird, kann ein Fremdkörper aufgrund der elektromagnetischen Wechselsignale erhitzt werden und eine Gefahrenquelle für den sicheren Betrieb bedeuten. Andere Ursachen für eine starke Erhitzung der Kontaktflächen werden somit nicht als Fremdkörper erkannt und können beispielsweise zur Ausgabe eines alternativen Hinweises an den Anwender verwendet werden. Beispielsweise kann der Anwender aufgefordert werden, die jeweilige Vorrichtung gegen eine direkte Sonneneinstrahlung zu schützen.

Gemäß einem dritten Aspekt der vorliegenden Erfindung wird eine induktive Ladeeinrichtung vorgeschlagen, welche beispielsweise zum Laden eines elektrisch antreibbaren Fortbewegungsmittels (z. B. Pedelec, e-Bike, e-Roller) ausgestaltet sein kann. Diese umfasst eine Vorrichtung, wie sie in Verbindung mit dem erstgenannten Erfindungsaspekt im Detail beschrieben worden ist. Insbesondere eine primärseitig vorgesehene Vorrichtung mit einer Primärspule zur Übertragung elektromagnetischer Energie ermöglicht den bestimmungsgemäßen Betrieb der induktiven Ladeeinrichtung. Die Merkmale, Merkmalskombinationen und die durch diese verwirklichten Vorteile ergeben sich entsprechend.

Gemäß einem vierten Aspekt der vorliegenden Erfindung wird ein Verfahren zum Betrieb einer Vorrichtung bzw. einer induktiven Ladeeinrichtung nach einem der vorstehend beschriebenen Erfindungsaspekte vorgeschlagen. In einem ersten Schritt wird das Signal eines ersten Temperatursensors ausgewertet, welcher thermisch mit einer Kontaktfläche der Vorrichtung gekoppelt ist. In einem zweiten Schritt wird ein thermisch an eine Spule der Vorrichtung gekoppelter zweiter Temperatursensor ausgewertet. In Abhängigkeit eines Vergleiches der mittels der Temperatursensoren ermittelten Temperaturanstiege pro Zeiteinheit wird ein Fremdobjekt auf der Kontaktfläche erkannt (oder alternativ ein anderer Fehlerfall festgestellt). Je nachdem, ob es sich bei der Vorrichtung um eine primärseitige oder eine sekundärseitige Vorrichtung handelt, ist die über den zweiten Temperatursensor überwachte Spule eine Primärspule oder eine Sekundärspule. Entsprechend ist die Kontaktfläche zur Anlage einer Sekundäreinheit oder einer induktiven Ladeeinrichtung als Primäreinheit ausgestaltet. Das Verfahren kann selbstverständlich ein Auslesen von Referenzen aus einem Datenspeicher umfassen, mit welchen die ermittelten Temperaturanstiege bzw. deren Differenz verglichen werden. Es ergeben sich die Merkmale, Merkmalskombinationen und Vorteile entsprechend den vorgenannten Erfindungsaspekten.

Gemäß einem fünften Aspekt der vorliegenden Erfindung wird ein Fortbewegungsmittel vorgeschlagen, welches beispielsweise als Zweirad ausgestaltet sein kann. Ein elektrisches Laden von Zweirädern ist insbesondere für elektrisch antreibbare Zweiräder (e-Bikes, Pedelecs, Elektroroller o. ä.) erforderlich und bevorzugt erfindungsgemäß abzusichern. Das Fortbewegungsmittel ist durch eine sekundärseitig angeordnete Vorrichtung gekennzeichnet, mittels welcher die Kontaktfläche zur Anlage einer induktiven Ladeeinrichtung auf einen vordefinierten Temperaturanstieg gegenüber einem Temperaturanstieg der Sekundärspule überprüft wird. Für den Fall, dass die Überprüfung das Vorhandensein eines Fremdkörpers ergibt, kann ein Signal an ein mit dem Fortbewegungsmittel elektrisch verbundenes Netzteil bzw. ein elektrisch mit dem Fortbewegungsmittel verbundenes Ladegerät ausgegeben werden, mittels dessen die primärseitige Energiezufuhr unterbrochen und eine unzulässige Kontaktflächenerwärmung gestoppt wird. Alternativ kann auch ein am Fortbewegungsmittel angeordnetes Schaltmittel angesteuert werden, durch welches der Ladevorgang beendet wird. Auch ein Identifizieren anderer Fehlerfälle ist entsprechend den vorstehend erläuterten Erfindungsaspekten möglich.

### Kurze Beschreibung der Zeichnung(en)

Nachfolgend werden Ausführungsbeispiele der Erfindung unter Bezugnahme auf die begleitenden Zeichnungen im Detail beschrieben. Es zeigen:
- Figur 1: eine schematische Ansicht auf Komponenten von Ausführungsbeispielen erfindungsgemäßer Vorrichtungen;
- Figur 2: ein Prinzipschaltbild veranschaulichend elektrische Komponenten eines Ausführungsbeispiels einer erfindungsgemäßen Auswerteeinheit;
- Figur 3: ein mögliches Temperatur-Zeit-Diagramm im Falle einer Fremdkörpererkennung;
- Figur 4: ein mögliches Temperatur-Zeit-Diagramm im Falle einer Überhitzung einer Spule;
- Figur 5: ein mögliches Temperatur-Zeit-Diagramm im Falle eines Kurzschlusses;
- Figur 6: ein mögliches Temperatur-Zeit-Diagramm im Falle eines falsch dimensionierten zu ladenden Akkumulators, und
- Figur 7: ein Flussdiagramm veranschaulichend Schritte eines Ausführungsbeispiels eines erfindungsgemäßen Verfahrens.

### Ausführungsformen der Erfindung

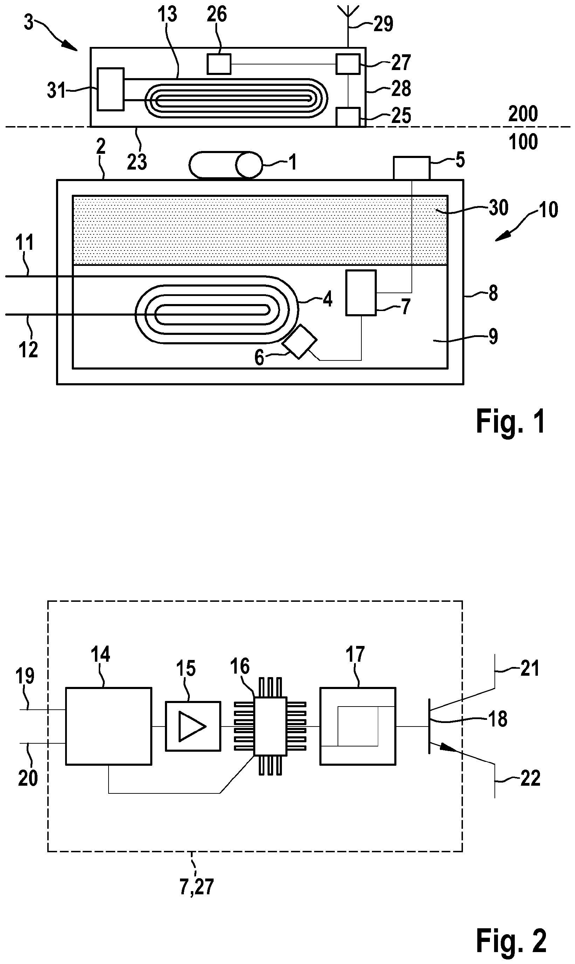

Figur 1 zeigt eine Prinzipdarstellung einer induktiven Ladeanordnung, welche durch eine gestrichelte Linie in einen primärseitigen Bereich 100 und einen sekundärseitigen Bereich 200 aufgeteilt ist. Der primärseitige Bereich 100 ist als induktive Ladeeinrichtung 10 der Energieversorgung zugeordnet, während der Sekundärseitige Bereich 200 in Form einer korrespondierenden Sekundäreinheit 3 einem elektrisch antreibbaren Fortbewegungsmittel zugeordnet ist. Versorgerseitig ist eine Primärspule 4 zur Übertragung elektromagnetischer Energie an eine Sekundärspule 13 vorgesehen. Hierzu erhält die Primärspule 4 über elektrische Anschlüsse 11, 12 eine elektrische Wechselspannung. Ein zweiter Temperatursensor 6 ist der Primärspule 4 zugeordnet und eingerichtet, die erfassten Temperatursignale an eine Auswerteeinheit 7 weiterzuleiten. Sowohl die Primärspule 4 als auch der zweite Temperatursensor 6 und die Auswerteeinheit 7 sind in einem thermisch volumenleitfähigen Material 9 angeordnet, welches die Entwärmung der Primärspule 4 begünstigt. Eine dem elektrisch antreibbaren Fortbewegungsmittel zugewandte Kontaktfläche 2 des Gehäuses 8 weist einen elektrisch leitfähigen Fremdkörper 1 auf. Im Wechselfeld der Primärspule 4 erwärmt sich der Fremdkörper 1 stark, wodurch ein erster Temperatursensor 5 auf der thermisch flächenleitfähigen Kontaktfläche 2 ein korrespondierendes Temperatursignal an die Auswerteeinheit 7 abgibt. Um den zweiten Temperatursensor 6 von der thermisch flächenleitfähigen Kontaktfläche 2 thermisch zu entkoppeln, ist zwischen der Kontaktfläche 2 und dem thermisch volumenleitfähigen Material 9 ein thermischer Isolator 30 angeordnet. Dieser verhindert ein allzu rasches Erwärmen des zweiten Temperatursensors 6 durch den Fremdkörper 1 bzw. des ersten Temperatursensors 5 durch die Abwärme der Primärspule 4. Dem Fremdkörper 1 gegenüber liegend ist eine Sekundäreinheit 3 dargestellt, in deren Gehäuse 28 eine Sekundärspule 13 vorgesehen ist, um einen Akkumulator 31 zu laden. Zur Gleichrichtung der empfangenen Energiesignale ist ein (nicht dargestellter) Gleichrichter (z. B. in Form einer Vollbrückenschaltung) vorgesehen. Die Temperatur der Sekundärspule 13 wird durch einen zweiten Temperatursensor 26 an eine Auswerteeinheit 27 weitergeleitet. Diese ist zudem mit einem ersten Temperatursensor 25 an einer thermisch flächenleitfähigen Kontaktfläche 23 informationstechnisch verbunden. Eine thermisch bessere Kopplung des ersten Temperatursensors 25 an die Kontaktfläche 23 gegenüber dem zweiten Temperatursensor 26 ergibt sich in der Sekundäreinheit 3 einerseits aufgrund der räumlichen Entfernung des zweiten Temperatursensors 26 von der Kontaktfläche 23 und andererseits durch eine Dotierung der Kontaktfläche 23, durch welche diese ihre thermisch hohe Flächenleitfähigkeit erhält. Die Auswerteeinheit 27 kann die Temperaturanstiege der Kontaktfläche 23 mit denen der Sekundärspule 13 vergleichen und im Falle vordefinierter Zusammenhänge eine Sendeeinheit 29 ansteuern, mittels welcher (nicht dargestellte) versorgerseitige Schaltmittel die Energieversorgung der Primärspule 4 unterbrechen. Diese Schaltmittel können beispielsweise Bestandteil der induktiven Einrichtung 10 sein.

Figur 2 zeigt Komponenten eines Ausführungsbeispiels einer erfindungsgemäß verwendbaren Auswerteeinheit 7, 27. Über einen ersten elektrischen Anschluss 19 erhält ein Komparator 14 die Signale eines ersten Temperatursensors und über einen zweiten elektrischen Anschluss 20 die Signale eines zweiten Temperatursensors. Wie in Verbindung mit Figur 1 ausgeführt, können die Temperatursensoren einer Spule einerseits und einer Kontaktfläche andererseits zugeordnet sein. Die Ausgangssignale des Komparators 14 werden über einen Verstärker 15 an einen Microcontroller 16 weitergeleitet, der über ein Hystereseglied 17 einen Leistungsschalter 18 ansteuert, soweit die eingangs erhaltenen Temperatursignale das Vorhandensein eines Fremdkörpers erkennen lassen. Somit wird der Leistungsschalter 18 geöffnet und eine Versorgung der primärseitigen Spule mit elektrischer Energie wird durch Trennen der ausgangsseitigen elektrischen Kontakte 21, 22 verhindert.

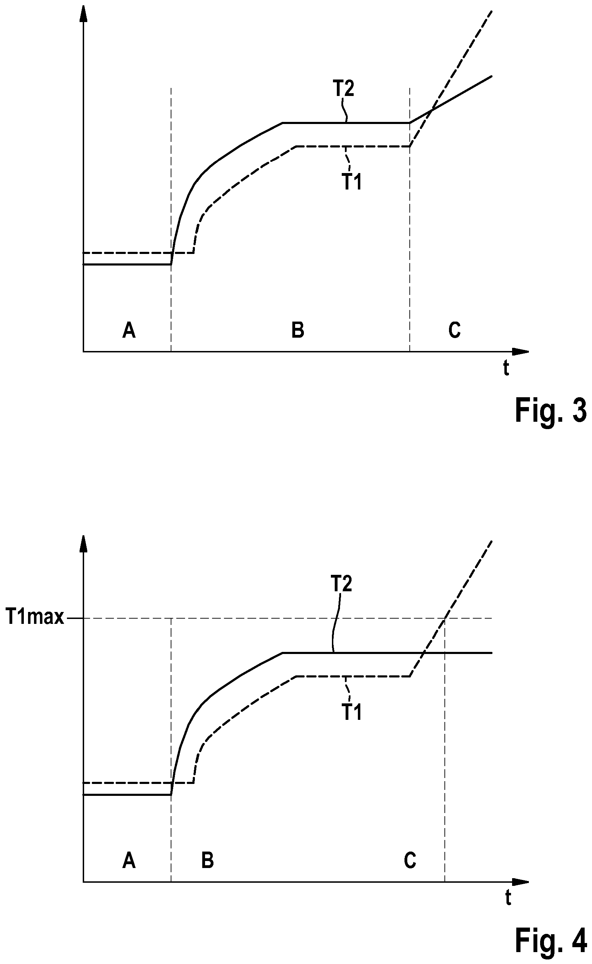

Die Figuren 3 bis 6 zeigen Temperatur-Zeit-Diagramme zu unterschiedlichen Fehlerfällen einer erfindungsgemäßen Vorrichtung. Hierin sind die unterschiedlichen Zeitbereiche wie folgt gekennzeichnet:
Der Bereich A kennzeichnet einen Ruhezustand, bevor eine induktive Energieübertragung stattfindet. Der Bereich B kennzeichnet einen Betriebszustand einer Inbetriebnahme in einer jeweiligen Anfangskonfiguration der Vorrichtung. Der Bereich C zeigt eine Anomalie, welche auf einen Fehlerfall schließen lässt. Hierbei sind die gestrichelte Linie das Temperatursignal T1 eines der Kontaktfläche zugeordneten Temperatursensors und die durchgezogene Linie eine Temperatur T2 einer Spule zugeordneten Temperatursensors. Für eine selektive Erkennung eines Fremdkörpers, wie sie in Figur 3 dargestellt ist, werden die Messwerte des ersten Temperatursensors mit den Messwerten eines zweiten Temperatursensors verglichen. Hierbei werden u. A. die Anstiegsgeschwindigkeiten der Temperaturen T1 und T2 miteinander verglichen. Bei einem starken Anstieg der Temperatur T1 gegenüber dem Anstieg der Temperatur T2 liegt ein Fremdkörper vor. Die Anstiegsgeschwindigkeiten müssen aufgrund der thermischen Trägheit des Systems nicht identisch und insbesondere nicht linear sein. Der erste Temperatursensor reagiert auf die vom Fremdkörper abgegebene Wärme. Der zweite Temperatursensor registriert die Temperaturänderung der Spule aufgrund der zusätzlichen Leistungsabgabe an den Fremdkörper. Diese Leistungsabgabe wird durch einen schnellen Stromanstieg an der Spule hervorgerufen.

In Figur 3 wird die thermische Trägheit durch einen zeitlichen Versatz des Anstieges der Temperaturn T1 gegenüber T2 veranschaulicht. Die im Normalbetrieb zunächst recht schnell ansteigende Temperatur T2 der Spule und die erfindungsgemäß vorgesehene Isolation des ersten Temperatursensors führen dazu, dass die Temperatur T1 sich zunächst auf einem gegenüber der Temperatur T2 niedrigeren Niveau einpendelt. Im Bereich C ändert sich dieses Verhältnis aufgrund eines Fremdkörpers drastisch. Obwohl kein absoluter Schwellenwert überschritten wird, kann der gegenüber dem Temperaturanstieg der Temperatur T2 erheblich steilere Anstieg der Temperatur T1 als Indikator für das Vorhandensein eines Fremdkörpers ausgewertet werden. Ist der Fremdkörper erkannt, wird bevorzugt zunächst die Übertragungsleistung auf der Primärseite als Schutzmechanismus reduziert. Gleichzeitig wird die Temperatur der Temperatursensoren weiter beobachtet. Fällt die Anstiegsgeschwindigkeit der Temperatursensoren wieder auf einen zulässigen Wert, wird die Übertragung mit dieser reduzierten Leistung fortgesetzt. Tritt die gewünschte Normalisierung der Anstiegsgeschwindigkeiten jedoch nicht ein, wird die Leistung weiter reduziert. In dieser Betriebsart hat der Nutzer die Gelegenheit, den Fremdkörper zu entfernen. Werden in dieser Betriebsart jedoch die vorgegebenen absoluten Schwellenwerte für die Temperaturen überschritten, schaltet das System zum Schutz der Kontaktflächen umgehend ab. In regelmäßigen Abständen (z. B. durch Anheben der Leistung bis zur Nennleistung) wird mittels der beschriebenen Schritte überprüft, ob sich der Fremdkörper fortwährend an der Kontaktfläche befindet, beispielsweise aufliegt. Ist der Fremdkörper entfernt worden und liegt auch kein sonstiger Fehler vor, wird das Gerät wieder in die Lage versetzt, die volle Leistung zu übertragen.

Figur 4 zeigt einen Fall, in welchem eine Überhitzung einer erfindungsgemäßen Vorrichtung aufgrund des Überschreitens einer maximalen Oberflächentemperatur T1ₘₐₓ erkannt wird. Nach dem Einschalten des Systems und dem Durchlaufen einer entsprechend Figur 3 aufgebauten Normalbetriebsphase B erkennt der erste Temperatursensor an der Oberfläche des Gehäuses durch eine ständige oder zyklische Auswertung der absoluten Temperatur im Bereich C einen starken Temperaturanstieg. Zusätzlich zum erfindungsgemäßen Vergleich dieses Temperaturanstieges mit dem Temperaturanstieg im Bereich einer Spule wird eine Schwellenwertbetrachtung zur Erkennung eines anderen Fehlers (z. B. einer starken Sonneneinstrahlung) vorgenommen. Hierbei ist es vorteilhaft, den Schwellenwert mit hinreichend Abstand zur Temperaturfestigkeit der Kontaktfläche zu wählen, damit eine rechtzeitige Abschaltung vor der Zerstörung der Kontaktfläche erfolgen kann. Die dargestellte Überschreitung des Schwellenwertes T1ₘₐₓ ist beispielsweise auf den Betrieb unter direkter Sonneneinstrahlung oder in einer überhitzten Umgebung zurückzuführen. Auch ein überhitzender Akkumulator in unmittelbarer Nähe der Vorrichtung kann ursächlich für ein Überschreiten des Schwellenwertes T1ₘₐₓ sein. Wird der in Figur 4 gezeigte Temperaturverlauf innerhalb einer erfindungsgemäß ausgestalteten induktiven Ladeeinrichtung festgestellt, wird sich die Erhitzung des Akkumulators zunächst auf die Oberflächentemperatur T1 und erst anschließend auf die Spulentemperatur T2 auswirken, da die Spule thermisch gegenüber der Oberfläche isoliert ist. In dem dargestellten Fall kann beispielsweise eine Fehlermeldung an den Anwender des Systems ausgegeben werden, welche diesen zur Beseitigung der Ursache für die Schwellenwertüberschreitung auffordert.

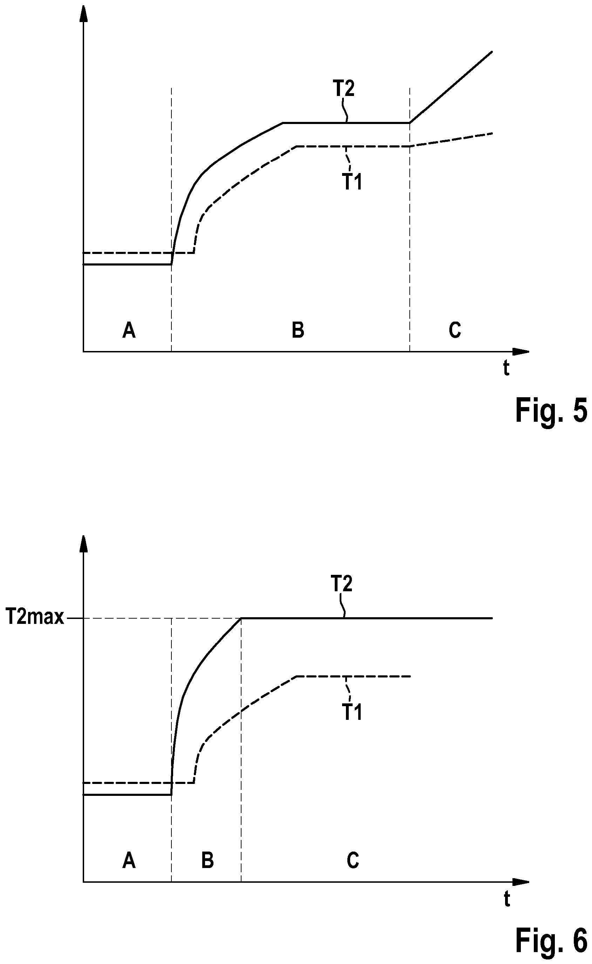

Figur 5 zeigt einen Fall, in welchem die Spule der Vorrichtung einen Kurzschluss aufweist, was im Bereich C zu einem starken Anstieg der Spulentemperatur T2 gegenüber einer lediglich leicht ansteigenden Oberflächentemperatur T1 führt. Die dargestellte Erkennung kann unter der Voraussetzung erfolgen, dass das Energieübertragungssystem als "eingeschaltet" klassifiziert wird. Im ungestörten Betrieb ist die Anstiegsgeschwindigkeit der Spulentemperatur T2 im eingeschwungenen Zustand des Systems gering. Die in Wärme umgewandelte Verlustleistung an der Spule korreliert in diesem Fall mit der für die Übertragung vorgesehenen elektrischen (Haupt-)leistung auf der Senderseite. Diese Leistung steht in direktem Zusammenhang mit dem langsam ansteigenden Ladezustand eines sekundärseitig zu ladenden Akkumulators. Aufgrund des steigenden Ladezustandes und der somit abnehmenden Ladeleistung wird die Hauptleistung an der Spule entsprechend sinken. Die Anstiegsgeschwindigkeit der Temperatur der Spule wird nun mit dem Temperaturanstieg der Oberflächentemperatur T1 verglichen. Sind die Anstiegsgeschwindigkeiten stark unterschiedlich, liegt ein Fehlerfall vor. Dieses ist zurückzuführen auf einen kurzgeschlossenen Strompfad, beispielsweise einem Kurzschluss an der betrachteten Spule. Der Kurzschluss nimmt einen Großteil der elektrischen Leistung auf, was zu einem schnellen Anstieg der Temperatur T2 führt. Eine weitere mögliche Ursache ist ein Kurzschluss in der Senderelektronik, der Empfängerelektronik, der Ladeelektronik und/oder in den Zellen des Akkumulators. Den vorstehend identifizierten Fehlerfällen steht ein im eingeschwungenen Zustand des Systems (ohne Fehler) auch gegen Null gehender Anstieg der Oberflächentemperatur T1 gegenüber. Die vorgenannten Fehlerfälle lassen sich unterscheiden, indem beispielsweise ein Testlauf der Senderseite ohne Vorhandensein der Empfängerseite durchgeführt wird. Dabei wird geprüft, ob ein unzulässiger Temperaturanstieg im "Leerlauf" stattfindet, was auf einen Kurzschlussstrom auf der Senderseite schließen lässt. Liegt der Fehler jedoch nur im Betrieb in Verbindung mit der Sekundärseite vor, so ist die Empfängerseite für den Kurzschluss selbst verantwortlich. Dieses ist die Folge eines hohen Stromflusses im Kurzschluss, welcher einen Leistungsanstieg auf der Primärseite nach sich zieht. Damit ist ein starker Anstieg der Spulentemperatur auf der Primärseite verbunden. In einem solchen Fehlerfall wird bevorzugt die Meldung "Kurzschluss" ausgegeben und das System wird automatisch abgeschaltet. Alternativ kann auch eine Fehlermeldung "Kurzschluss Sender" bzw. "Kurzschluss Empfänger" spezifiziert und ausgegeben werden.

Figur 6 zeigt ein Temperatur-Zeit-Diagramm für den Fall, dass ein nicht zugelassener Akkumulator mit einer erfindungsgemäßen induktiven Ladeeinrichtung geladen wird. Bereits bei der Inbetriebnahme (Bereich B) des Systems erfolgt ein drastischer Anstieg der Spulentemperatur T2 gegenüber der Oberflächentemperatur T1, welcher auf einen für das System zu höhen Ladestrom eines Akkumulators mit einer beispielsweise zu geringen Klemmenspannung und/oder einer zu hohen Nennkapazität bedingt sein kann. Die ohmschen Verluste innerhalb der betrachteten Spule sind höher als spezifiziert und die Maßnahmen zur Wärmeabfuhr der erfindungsgemäßen Vorrichtung daher nicht ausreichend, um die vorgesehene Maximaltemperatur T2ₘₐₓ der Spule einzuhalten. Beispielsweise kann in einem solchen Fall die Fehlermeldung "Falscher Akku" ausgegeben und das System über einen Leistungsschalter abgeschaltet werden.

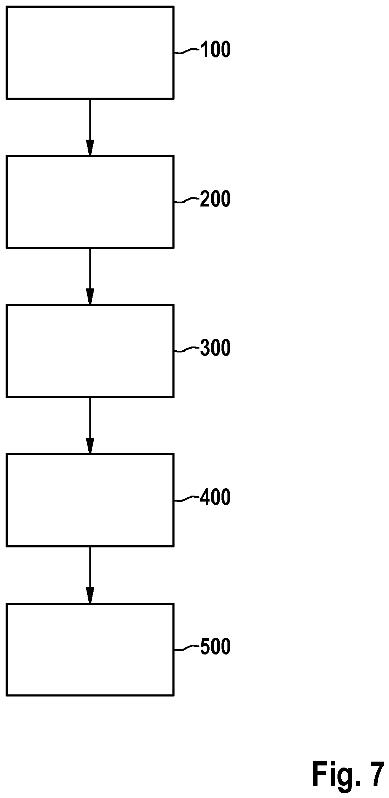

Figur 7 zeigt Schritte eines Ausführungsbeispiels eines erfindungsgemäßen Verfahrens. In Schritt 100 wird ein erster Temperatursensor, welcher thermisch an eine Kontaktfläche einer erfindungsgemäßen Vorrichtung gekoppelt ist, ausgewertet. Anschließend wird in Schritt 200 ein zweiter Temperatursensor, welcher thermisch an eine Spule der erfindungsgemäßen Vorrichtung gekoppelt ist, ausgewertet. In Schritt 300 wird ein Fremdobjekt auf der Kontaktfläche erkannt, wenn ein mittels des ersten Temperatursensors erfasster Temperaturanstieg der Kontaktfläche steiler als ein mittels des zweiten Temperatursensors erfasster Temperaturanstieg der Spule ist. Im Falle einer sekundärseitig (empfängerseitig bzw. seitens einer Mobileinheit) vorgesehen Vorrichtung kann in einem Schritt 400 zusätzlich ein Signal an eine primärseitig vorgesehene Schalteinrichtung gesendet werden. Im Ansprechen auf das Empfangen des gesendeten Signals wird in Schritt 500 die primärseitige Schalteinrichtung betätigt, um die Energiezufuhr zu stoppen. Auf diese Weise kann eine Überhitzung der Kontaktflächen aufgrund eines vorhandenen Fremdobjektes verhindert werden und ein Hinweis an den Anwender zur Entfernung des Fremdobjektes ausgegeben werden.

## Patentansprüche

1. Induktive Ladeeinrichtung mit einer Auswerteeinheit zur Erkennung eines Fremdobjektes (1) an einer Oberfläche (2) zur Energieübertragung zwischen einer Primärspule (4) einer induktiven Einrichtung (10) und einer Sekundärspule (13) einer Sekundäreinheit (3) umfassend:
- eine Primärspule (4, 13),
- eine Oberfläche (2), durch welche im Wesentlichen die Energieübertragung zwischen der Primärspule (4) und der Sekundärspule (13) stattfindet,
- einen thermisch an die Oberfläche (2) gekoppelten ersten Temperatursensor (5), **gekennzeichnet durch**
- einen thermisch an die Spule (4, 13) gekoppelten zweiten Temperatursensor (6), und
- eine informationstechnisch mit den Temperatursensoren (5, 6) verbundene Auswerteeinheit (7),
wobei die Auswerteeinheit (7) eingerichtet ist, im Ansprechen auf einen gegenüber einem Anstieg der mittels des ersten Temperatursensors (5) erfassten Temperatur langsameren Anstieg der mittels des zweiten Temperatursensors (6) erfassten Temperatur ein Fremdobjekt (1) auf der Oberfläche (2) zu erkennen.

2. Induktive Ladeeinrichtung nach Anspruch 1 umfassend die Primärspule als Spule (4, 13) zum induktiven Senden von Energie an die Sekundäreinheit (3).

3. Induktive Ladeeinrichtung nach Anspruch 1 umfassend die Sekundärspule als Spule (4, 13) zum induktiven Empfangen von Energie von der induktiven Einrichtung (10).

4. Induktive Ladeeinrichtung nach Anspruch 1 oder 3 weiter umfassend eine Sendeeinheit (29) zur Ausgabe eines Signals an die induktive Einrichtung (10) im Ansprechen auf einen auf der Oberfläche (23) erkannten Fremdkörper (1).

5. Induktive Ladeeinrichtung nach einem der vorstehenden Ansprüche, wobei die Oberfläche (2, 23) gegenüber dem zweiten Temperatursensor (6, 26) thermisch isoliert ist.

6. Induktive Ladeeinrichtung nach einem der vorstehenden Ansprüche, wobei die Auswerteeinheit (7, 27) weiter eingerichtet ist, eine mittels des ersten Temperatursensors (5, 25) und/oder des zweiten Temperatursensors (6, 26) erfasste Temperatur mit einem jeweiligen Schwellenwert zu vergleichen und im Falle einer Überschreitung ein Fehlersignal auszugeben.

7. Induktive Ladeeinrichtung nach einem der vorstehenden Ansprüche, weiter umfassend ein Gehäuse (8, 28), wobei die Oberfläche (2, 23) durch eine Dotierung eines Oberflächenbereiches des Gehäuses (8, 28) gebildet ist und eine gegenüber übrigen Gehäuseabschnitten eine thermisch erhöhte Leitfähigkeit aufweist.

8. Induktive Ladeeinrichtung nach einem der vorstehenden Ansprüche, wobei die Primärspule (4) und/oder die Sekundärspule (13) zu Entwärmungszwecken in ein thermisch volumenleitfähiges Material (9) eingebettet ist.

9. Induktive Ladeeinrichtung nach einem der vorstehenden Ansprüche, wobei die Auswerteeinheit (7, 27) eingerichtet ist, das Bestehen einer elektrischen Energieübertragung zwischen der induktiven Einrichtung (10) und der Sekundäreinheit (3) zu überprüfen, bevor eine Fremdkörpererkennung durchgeführt wird.

10. Elektrisch antreibbares Fortbewegungsmittel mit einer induktiven Ladeeinrichtung nach einem der vorstehenden Ansprüche.

11. Verfahren zum Betrieb einer induktiven Ladeeinrichtung nach einem der vorstehenden Ansprüche 1 bis 9 oder eines elektrisch antreibbaren Fahrzeugs nach Anspruch 10, umfassend die Schritte:
- Auswerten (100) eines thermisch an die Oberfläche (2, 23) der Auswerteeinheit gekoppelten ersten Temperatursensors (5, 25),
- Auswerten (200) eines thermisch an eine Spule (4, 13) der Auswerteeinheit gekoppelten zweiten Temperatursensors (6, 26), und
- Erkennung (300) eines Fremdobjektes (1) auf der Oberfläche (2, 23) im Ansprechen auf einen gegenüber einem Anstieg der mittels des ersten Temperatursensors (5, 25) erfassten Temperatur langsameren Anstieg der mittels des zweiten Temperatursensors (6, 26) erfassten Temperatur.

12. Elektrisch antreibbares Fortbewegungsmittel nach Anspruch 10, wobei es sich bei dem Fortbewegungsmittel um ein Zweirad handelt.

## Claims

1. Inductive charging device comprising an evaluation unit for identifying a foreign object (1) on a surface (2) for transmitting energy between a primary coil (4) of an inductive device (10) and a secondary coil (13) of a secondary unit (3), comprising:
- a primary coil (4, 13),
- a surface (2), through which energy is transmitted substantially between the primary coil (4) and the secondary coil (13),
- a first temperature sensor (5) thermally coupled to the surface (2),
**characterized by**
- a second temperature sensor (6) thermally coupled to the coil (4, 13), and
- an evaluation unit (7) connected to the temperature sensors (5, 6) for information interchange purposes, wherein the evaluation unit (7) is configured to identify a foreign object (1) on the surface (2) in response to an increase in the temperature detected by means of the second temperature sensor (6) that is slower with respect to an increase in the temperature detected by means of the first temperature sensor (5).

2. Inductive charging device according to Claim 1, comprising the primary coil as the coil (4, 13) for inductively transmitting energy to the secondary unit (3) .

3. Inductive charging device according to Claim 1, comprising the secondary coil as the coil (4, 13) for inductively receiving energy from the inductive device (10) .

4. Inductive charging device according to Claim 1 or 3, further comprising a transmission unit (29) for emitting a signal to the inductive device (10) in response to a foreign object (1) identified on the surface (23).

5. Inductive charging device according to one of the preceding claims, wherein the surface (2, 23) is thermally insulated with respect to the second temperature sensor (6, 26).

6. Inductive charging device according to one of the preceding claims, wherein the evaluation unit (7, 27) is further configured to compare a temperature detected by means of the first temperature sensor (5, 25) and/or the second temperature sensor (6, 26) with a respective threshold value and, in the event of an exceedance, to emit a fault signal.

7. Inductive charging device according to one of the preceding claims, further comprising a housing (8, 28), wherein the surface (2, 23) is formed by a doping of a surface region of the housing (8, 28) and has a a thermally increased conductivity with respect to other housing sections.

8. Inductive charging device according to one of the preceding claims, wherein the primary coil (4) and/or the secondary coil (13) is embedded in a thermally volume-conductive material (9) for the purpose of removing heat.

9. Inductive charging device according to one of the preceding claims, wherein the evaluation unit (7, 27) is configured to check for the existence of electrical energy transmission between the inductive device (10) and the secondary unit (3) before foreign object identification is carried out.

10. Means of transport that can be electrically driven, comprising an inductive charging device according to one of the preceding claims.

11. Method for operating an inductive charging device according to one of the preceding Claims 1 to 9 or a vehicle that can be electrically driven according to Claim 10, comprising the following steps:
- evaluating (100) a first temperature sensor (5, 25) thermally coupled to the surface (2, 23) of the evaluation unit,
- evaluating (200) a second temperature sensor (6, 26) thermally coupled to a coil (4, 13) of the evaluation unit, and
- identifying (300) a foreign object (1) on the surface (2, 23) in response to an increase in the temperature detected by means of the second temperature sensor (6, 26) that is slower with respect to an increase in the temperature detected by means of the first temperature sensor (5, 25).

12. Means of transport that can be electrically driven according to Claim 10, wherein the means of transport is a bicycle.

## Revendications

1. Dispositif de charge inductif comprenant une unité d'interprétation destinée à reconnaître un objet externe (1) sur une surface (2) en vue de la transmission d'énergie entre une bobine primaire (4) d'un dispositif inductif (10) et une bobine secondaire (13) d'une unité secondaire (3), comprenant :
- une bobine primaire (4, 13),
- une surface (2) à travers laquelle se déroule pour l'essentiel la transmission d'énergie entre la bobine primaire (4) et la bobine secondaire (13),
- une première sonde de température (5) couplée thermiquement à la surface (2),
**caractérisé par**
- une deuxième sonde de température (6) couplée thermiquement à la bobine (4, 13), et
- une unité d'interprétation (7) reliée informatiquement aux sondes de température (5, 6), l'unité d'interprétation (7) étant conçue pour reconnaître un objet externe (1) sur la surface (2) en réaction à une augmentation de la température détectée au moyen de la deuxième sonde de température (6) plus lente par rapport à une augmentation de la température détectée au moyen de la première sonde de température (5) .

2. Dispositif de charge inductif selon la revendication 1, comprenant la bobine primaire en tant que bobine (4, 13) servant à l'émission inductive d'énergie à l'unité secondaire (3).

3. Dispositif de charge inductif selon la revendication 1, comprenant la bobine secondaire en tant que bobine (4, 13) servant à la réception inductive d'énergie du dispositif inductif (10).

4. Dispositif de charge inductif selon la revendication 1 ou 3, comprenant en outre une unité d'émission (29) destinée à délivrer un signal au dispositif inductif (10) en réaction à un corps externe (1) reconnu sur la surface (23).

5. Dispositif de charge inductif selon l'une des revendications précédentes, la surface (2, 23) étant isolée thermiquement par rapport à la deuxième sonde de température (6, 26).

6. Dispositif de charge inductif selon l'une des revendications précédentes, l'unité d'interprétation (7, 27) étant en outre conçue pour comparer une température détectée au moyen de la première sonde de température (5, 25) et/ou de la deuxième sonde de température (6, 26) à une valeur de seuil respective et délivrer un signal de défaut dans le cas d'un dépassement.

7. Dispositif de charge inductif selon l'une des revendications précédentes, comprenant en outre un boîtier (8, 28), la surface (2, 23) étant formée par un dopage d'une zone de la surface du boîtier (8, 28) et possédant une une conductivité thermique accrue par rapport aux autres portions du boîtier.

8. Dispositif de charge inductif selon l'une des revendications précédentes, la bobine primaire (4) et/ou la bobine secondaire (13) étant enrobées dans un matériau (9) à conductance volumique thermique à des fins de dissipation de la chaleur.

9. Dispositif de charge inductif selon l'une des revendications précédentes, l'unité d'interprétation 7, 27) étant conçue pour vérifier la présence d'une transmission d'énergie électrique entre le dispositif inductif (10) et l'unité secondaire (3) avant que soit effectuée une reconnaissance de corps externe.

10. Moyen de transport à propulsion électrique comprenant un dispositif de charge inductif selon l'une des revendications précédentes.

11. Procédé pour faire fonctionner un dispositif de charge inductif selon l'une des revendications 1 à 9 ou un véhicule à propulsion électrique selon la revendication 10, comprenant les étapes suivantes :
- interprétation (100) d'une première sonde de température (5, 25) couplée thermiquement à la surface (2, 23) de l'unité d'interprétation,
- interprétation (200) d'une deuxième sonde de température (6, 26) couplée thermiquement à une bobine (4, 13) de l'unité d'interprétation, et
- reconnaissance (300) d'un objet externe (1) sur la surface (2, 23) en réaction à une augmentation de la température détectée au moyen de la deuxième sonde de température (6, 26) plus lente par rapport à une augmentation de la température détectée au moyen de la première sonde de température (5, 25).

12. Moyen de transport à propulsion électrique selon la revendication 10, le moyen de transport étant un deux-roues.
